# EUROPEAN PATENT APPLICATION

(11) **EP 4 826 748 A1**
(43) Date of publication of application: **21.10.2026**
(21) Application number: 25751957.9
(22) Date of filing: 03.02.2025
(51) Int. Cl.: H01G 9/042, H01G 9/00, H01G 9/045, H01G 11/34

(54) **NEGATIVE ELECTRODE BODY, ELECTROLYTIC CAPACITOR, AND PRODUCTION METHODS FOR NEGATIVE ELECTRODE BODY AND ELECTROLYTIC CAPACITOR**

(30) Priority: 07.02.2024 JP 2024017384
(71) Applicant: Nippon Chemi-Con Corporation, Tokyo 141-8605 (JP)
(72) Inventor: KOSEKI Kazuya, Tokyo 141-8605 (JP); HATAE Tatsuru, Tokyo 141-8605 (JP); NAGAHARA Kazuhiro, Tokyo 141-8605 (JP); SUEMATSU Shunzo, Tokyo 141-8605 (JP)
(74) Representative: AWA Sweden AB
(86) International application number: PCT/JP2025/003470
(87) International publication number: WO 2025/169889

(57) **Abstract**

A cathode body that can suppress generation of hydrogen gas, and an electrolytic capacitor including said cathode body are provided. The cathode body includes a cathode foil formed of valve metal and a carbon layer containing carbon material and laminated on the cathode foil. Regarding the carbon material, a peak P1 originating from a C-O bond in the O1s spectrum, a peak P2 originating from an O-C=O bond in the O1s spectrum, and a peak P3 originating from a C=O bond in the O1s spectrum are detected. Also, the ratio of the total of the area ratio [COO] of the peak P2 and the area ratio [C=O] of the peak P3 relative to the area ratio [C-O] of the peak P1 is ([COO]+[C=O])/[C-O]<2.0.

## Description

### FIELD OF INVENTION

The present disclosure relates to an electrolytic capacitor, a cathode body included in said electrolytic capacitor, and a manufacturing method of the electrolytic capacitor and the cathode body.

### BACKGROUND

Electrolytic capacitors include valve metal, such as tantalum or aluminum, as an anode foil and a cathode foil. A surface of the anode foil is enlarged by making the valve metal into a sintered body or a shape such as an etching foil, and the enlarged surface has a dielectric film thereon. Electrolytic solution intervenes between the anode foil and the cathode foil. The electrolytic solution closely contacts the uneven surface of the anode foil and acts as a true cathode.

The electrolytic solution repairs a deteriorated portion, such as deterioration and damage, of the dielectric film formed on the anode foil by leakage current. However, hydrogen gas is generated due to film repairing of the dielectric film by leakage current. That is, the anode reaction expressed by the following chemical reaction formula (1) occurs at the anode side during film repairing by leakage current. Then, the cathode reaction expressed by the following chemical reaction formula (2), in which electrons generated in the anode reaction are accepted and reduce hydrogen ions, occurs at the cathode side during film repairing by leakage current. Atomic hydrogen generated by the chemical reaction formula (2) bonds as expressed by the following chemical reaction formula (3), generating hydrogen gas.

2Al + 3H₂O → Al₂O₃ + 6H⁺ +6e⁻ ··· (1)

6H⁺ + 6e⁻ → 6H_{ad} ··· (2)

6H_{ad} → 3H₂ ··· (3)

The hydrogen gas raises the internal pressure of the electrolytic capacitor, potentially causing swelling of casings which houses capacitor elements therein, swelling of sealing bodies which seal capacitor elements, and opening of pressure relief valves provided in the electrolytic capacitors. If leakage current increases at the anode side and charge transfer on the surface of the electrode at the anode side becomes more drastic, the reaction rate at the cathode side also increases according to Faraday's law, increasing the generation amount of hydrogen gas at the cathode side.

In particular, in recent years, larger capacitance is demanded for the electrolytic capacitors for middle to high voltage application of 100 V or more. In other words, thinning of dielectric film while maintaining the withstand voltage is demanded for the electrolytic capacitor. However, when the dielectric film becomes thinner, leakage current tends to increase, causing a problem that the generation amount of hydrogen gas increases.

Nitro compounds may be added to the electrolytic solution. Nitro compounds are reduced at the cathode side and react with hydrogen ions. Therefore, nitro compounds suppress the generation of hydrogen gas. However, since the withstand voltage of the electrolytic capacitors may decrease depending on the type of nitro compounds, the use of nitro compounds is limited. Furthermore, since nitro compounds are reduced at the cathode side over time, the hydrogen gas suppression performance deteriorates.

### PRIOR ART DOCUMENT

### PATENT DOCUMENT

Patent Document 1: JP2017-34030A

### SUMMARY OF INVENTION

### PROBLEMS TO BE SOLVED BY INVENTION

A new method to suitably suppress hydrogen gas is demanded for the electrolytic capacitors. The present disclosure is proposed to address the above problem, and the objective is to provide a cathode body that can suppress generation of hydrogen gas, an electrolytic capacitor including said cathode body, and a manufacturing method of the cathode body and the electrolytic capacitor.

### MEANS TO SOLVE THE PROBLEM

To address the above problem, a cathode body of an electrolytic capacitor of the present embodiment includes: a cathode foil formed of a valve metal; and a carbon layer containing a carbon material and laminated on the cathode foil, in which in an X-ray photoelectron spectroscopy analysis, the carbon material exhibits a peak P1 originating from a C-O bond in an O1s spectrum, a peak P2 originating from an O-C=O bond in an O1s spectrum, and a peak P3 originating from a C=O bond in an O1s spectrum, and a ratio of a total of an area ratio [COO] of the peak P2 and an area ratio [C=O] of the peak P3 relative to an area ratio [C-O] of the peak P1 is ([COO]+[C=O])/[C-O]<2.0.

Furthermore, the peak P1 originating from the C-O bond in the O1s spectrum may appear in a range of 533 eV or more, the peak P2 originating from the O-C=O bond in the O1s spectrum may appear in a range of 530 eV or more and 533 eV or less, and the peak P3 originating from the C=O bond in the O1s spectrum may appear in a range of 530 eV or more and 533 eV or less.

Furthermore, to address the above problem, the electrolytic capacitor of the present embodiment includes: a cathode body; an anode body having a dielectric film and facing the cathode body, and an electrolyte intervening between the cathode body and the anode body.

To address the above problem, a manufacturing method of a cathode body of an electrolytic capacitor of the present embodiment includes: a surface functional group adjustment process of adjusting an amount of a surface functional group of a carbon material, and a carbon layer lamination process of forming a carbon layer containing the carbon material on a cathode foil formed of a valve metal, in which in the surface functional group adjustment process, in an X-ray photoelectron spectroscopy analysis, the carbon material exhibits a peak P1 originating from a C-O bond in an O1s spectrum, a peak P2 originating from an O-C=O bond in an O1s spectrum, and a peak P3 originating from a C=O bond in an O1s spectrum, and a ratio of a total of an area ratio [COO] of the peak P2 and an area ratio [C=O] of the peak P3 relative to an area ratio [C-O] of the peak P1 is adjusted to ([COO]+[C=O])/[C-O]<2.0.

Furthermore, the peak P1 of the O1s spectrum originating from the C-O bond may appear in a range of 533 eV or more, the peak P2 of the O1s spectrum originating from the O-C=O bond may appear in a range of 530 eV or more and 533 eV or less, and the peak P3 of the O1s spectrum originating from the C=O bond may appear in a range of 530 eV or more and 533 eV or less.

Furthermore, to address the above problem, the manufacturing method of the electrolytic capacitor of the present embodiment includes: a process of producing the cathode body, a process of producing an anode body having a dielectric film, and a process of interposing an electrolyte between the cathode body and the anode body.

### EFFECT OF INVENTION

According to the present disclosure, the generation of hydrogen gas can be suppressed by controlling functional groups of the carbon layer formed on the cathode body.

### BRIEF DESCRIPTION OF DRAWINGS

Fig. 1 illustrates the result of X-ray photoelectron spectroscopy analysis of the carbon material of Example 1.
Fig. 2 illustrates the result of X-ray photoelectron spectroscopy analysis of the carbon material of Example 2.
Fig. 3 illustrates the result of X-ray photoelectron spectroscopy analysis of the carbon material of Example 3.
Fig. 4 illustrates the result of X-ray photoelectron spectroscopy analysis of the carbon material of Comparative Example 1.
Fig. 5 illustrates the result of X-ray photoelectron spectroscopy analysis of the carbon material of Comparative Example 2.
Fig. 6 illustrates the result of X-ray photoelectron spectroscopy analysis of the carbon material of Comparative Example 3.
Fig. 7 is a graph indicating the time variation of the volume of the electrolytic capacitors of Examples 1 to 3, and Comparative Examples 1 to 4.

### EMBODIMENTS

Hereinafter, a cathode body and an electrolytic capacitor, and a manufacturing method of the cathode body and the electrolytic capacitor according to the embodiments of the present disclosure will be described. Note that the present disclosure is not limited to the following embodiments.

### (Cathode Body)

A cathode body is an electrode arranged at the cathode side of an electrolytic capacitor. The electrolytic capacitor with this cathode body is a passive element that obtains the capacitance by the dielectric polarization of a dielectric film and stores and discharges electric charge. For example, the electrolytic capacitors may be electrolytic capacitors using electrolytic solutions and so-called hybrid-type electrolytic capacitors including conductive polymers and electrolytic solutions.

The cathode body includes a cathode foil formed of valve metal. The valve metal is aluminum, tantalum, niobium, niobium oxide, titanium, hafnium, zirconium, zinc, tungsten, bismuth, and antimony, etc. The purity of the cathode foil is desirably 99% or more, and impurities such as silicon, iron, copper, magnesium, and zinc may be included.

For example, aluminum material with the temper designation of H defined in JIS standard H0001, that is, H material, and aluminum material with the temper designation of O defined in JIS standard H0001, that is, O material, may be used as the cathode foil. Using highly rigid metal foil made of H material can suppress deformation of the cathode foil when performing press processing, that is described later, for adhering cathode foil and the carbon material with each other.

The cathode foil is formed by elongating the valve metal into a foil-shape. The surface enlargement may be applied on a surface of the cathode foil. An enlarged surface layer of the cathode foil is formed by electrolytic etching, chemical etching, or sandblasting, and the like, or is formed by vapor-depositing or sintering metal particles and the like on the metal foil. The electrolytic etching may be DC etching or AC etching, etc. Alternatively, in the chemical etching, the metal foil is immersed in an acidic solution or an alkaline solution. The enlarged surface layer is a porous region such as a layer region with tunnel-shaped etching pits dug from the foil surface toward the foil core or with spongy etching pits, or voids between dense powder. Note that the etching pit may be formed so as to penetrate the cathode foil.

An oxide film may be formed on the enlarged surface layer naturally or intentionally. The natural oxide film is formed when the cathode foil reacts with oxygen in the air, and a chemical conversion film is a thin oxide film of about 1 to 10 V intentionally formed by chemical conversion treatment. In the chemical conversion treatment, voltage is applied on the cathode foil in a solution without halogen ions such as an aqueous solution of adipic acid, boric acid, etc. When the metal foil is an aluminum foil, the oxide film by this method is aluminum oxide which is an oxidized surface of the enlarged surface layer.

This cathode foil is connected to a lead terminal when assembling the electrolytic capacitor. The lead terminal is electrically or mechanically connected by stitching, cold-welding, ultrasonic welding, and laser welding, etc.

The cathode body has a laminated structure of this cathode foil and a carbon layer. That is, the carbon layer is laminated on the cathode foil. The carbon layer is laminated on one or both surfaces of the cathode foil and is located at the outermost surface of the cathode body. The carbon layer contains carbon material. Furthermore, the carbon layer may contain metal such as titanium, and metal nitrides or metal carbides such as titanium nitride, titanium carbide, or aluminum carbide, in addition to the carbon material. A plurality of the carbon layers may be laminated.

The carbon material is fibrous carbon, carbon powder, or mixtures thereof. The carbon material may be fibrous carbon and carbon powder treated with porous treatment, such as activation treatment and opening treatment forming pores. For example, the carbon powder may be natural plant tissues such as coconut shells, synthetic resins such as phenol, activated carbon made from fossil fuel such as coal, coke, pitch, and the like, carbon black such as Ketjen black, acetylene black, and channel black, carbon nanohorn, amorphous carbon, natural graphite, artificial graphite, graphitized Ketjen black, mesoporous carbon, etc. For example, the fibrous carbon is carbon nanotubes or carbon nanofibers, etc. The carbon nanotubes may be single-walled carbon nanotubes with a single layer of a graphene sheet, or multi-walled carbon nanotubes (MWCNTs) in which two or more layers of graphene sheets are curled up on the same axis and a tube wall forms multiple layers.

The carbon material is attached on the cathode foil by coating, vapor-deposition, or thermal treatment, etc. In the coating method, a slurry containing the carbon material, a binder, and a solvent is applied on the cathode foil by slurry casting, doctor blading, or spraying, and the like, the cathode foil is dried, and the cathode foil and the carbon layer is adhered by pressing if necessary. In the thermal treatment, powder of the carbon material is attached on the surface of the cathode foil and is sintered.

This carbon material has a surface functional group on the surface. The carbon material at least has a hydroxyl group that is a C-O bond, a carboxyl group that is an O-C=O bond, a lactone group or acid anhydride, and a carbonyl group that is a C=O bond as a surface functional group. Note that hydroxyl groups are observed as C-O bonds in the X-ray photoelectron spectroscopy analysis of an O1s spectrum.

The amount of these surface functional groups of the carbon material are adjusted by sintering the carbon material under the reduction atmosphere or by treating the carbon material using agents to reduce only the target surface functional groups. The reduction atmosphere is atmosphere with little or no oxygen, low-oxidizing gas or vapor, and for example, is nitrogen, argon or hydrogen atmosphere. For example, since the O-C=O bond is decarbonized and transforms to CO2 gas when being sintered in the reduction atmosphere, the amount of the surface functional groups containing the O-C=O bond decreases.

Furthermore, these surface functional groups of the carbon material are adjusted by treating the carbon material using agents to reduce only the target surface functional groups. The reduction agents may be hydrogen, sodium borohydride, and lithium aluminum hydride, etc. In particular, when sodium borohydride is used, only carbonyl groups are selectively reduced among the surface functional groups contained in the carbon material, resulting in a decrease in the amount of the surface functional groups containing the C=O bond.

Then, the amount of the surface functional groups in the carbon material is adjusted as follows. That is, the carbon material is analyzed using X-ray photoelectron spectrum analysis. When the O1s spectrum is separated into individual waves, a peak P1 originating from a C-O bond in the O1s spectrum, a peak P2 originating from an O-C=O bond in the O1s spectrum, and a peak P3 originating from a C=O bond in the O1s spectrum are detected. The peak P1 originating from the C-O bond in the O1s spectrum appears in the range of 533 eV or more. The peak P2 originating from the O-C=O bond in the O1s spectrum appears in the range of 530 eV or more and 533 eV or less. The peak P3 originating from the C=O bond in the O1s spectrum appears in the range of 530 eV or more and 533 eV or less.

The area ratio of the peak P1 originating from the C-O bond in the O1s spectrum is defined as [C-O]. Furthermore, the area ratio of the peak P2 originating from O-C=O bond in the O1s spectrum is defined as [COO]. Furthermore, the area ratio of the peak P3 originating from C=O bond in the O1s spectrum is defined as [C=O]. At this time, the ratio of the total of the area ratio [COO] of the peak P2 and the area ratio [C=O] of the peak P3 relative to the area ratio [C-O] of the peak P1 is ([COO]+[C=O])/[C-O]<2.0.

That is, the amount of the surface functional groups of the carbon material is adjusted to satisfy the following formula (1). In other words, the total amount of the surface functional group containing the O-C=O bond and the surface functional group containing the C=O bond, which are more oxidized than the surface functional group containing the C-O bond, is reduced until the following formula (1) is at least satisfied.

([COO]+[C=O])/[C-O]<2.0 ••• (1)

[COO] is the area ratio of the peak P2 originating from the O-C=O bond in the O1s spectrum, [C=O] is the area ratio of the peak P3 originating from the C=O bond in the O1s spectrum, and [C-O] is the area ratio of the peak P1 originating from the C-O bond in the O1s spectrum.

The generation amount of hydrogen gas within the electrolytic capacitor is reduced by laminating the carbon layer containing the carbon material which satisfies the above formula (1) on the cathode body. Although this mechanism is an assumption and is not limited thereto, the mechanism in which the generation of hydrogen gas is suppressed by satisfying the above formula (1) is considered as follows.

Firstly, at the cathode side, the reduction reaction of dissolved oxygen expressed by the following chemical formula (4) may occur, in addition to the reduction reaction of hydrogen ions expressed by the above chemical formula (2). Furthermore, when the cathode reaction that reduces dissolved oxygen is predominant, the cathode reaction that reduces hydrogen ions is suppressed.

O₂ + 2H₂O + 4e⁻ → 4OH⁻ ··· (4)

Then, the surface functional groups which are oxidized are prone to the reduction reaction, such as the O-C=O bond being reduced to the H-C=O bond and the C-OH bond. This reduction reaction acts to suppress the reduction reaction of dissolved oxygen in the electrolytic solution. The reduction reaction of hydrogen ions is suppressed when the reduction reaction of dissolved oxygen is predominant, however, the reduction reaction of hydrogen ions more likely occurs when the reduction reaction of dissolved oxygen is suppressed. Accordingly, the generation of hydrogen gas is facilitated.

In contrast, the reduction reaction due to the surface functional group of the carbon material decreases by reducing the amount of the oxidized surface functional groups, making it difficult to inhibit the reduction reaction of dissolved oxygen. Accordingly, the reduction reaction of dissolved oxygen suppresses the reduction reaction of hydrogen ion, suppressing the generation of hydrogen gas. Finally, the generation of hydrogen gas is significantly suppressed by satisfying the above formula (1).

### (Electrolytic Capacitor)

The electrolytic capacitor is formed by housing a capacitor element with the cathode body in a casing and sealing an opening of the casing by a sealing body. The casing is formed of aluminum, aluminum alloy containing aluminum or manganese, or stainless steel, and for example is a cylinder with a bottom and an opening at the other end. The opening of the casing is bent and crushed inward by crimping, so that the sealing body adheres to the casing. The sealing body is formed from a resin plate containing resins such as phenol resins or from an elastic body such as rubber.

The capacitor element includes an anode body and a separator, other than the cathode body. Furthermore, the capacitor element includes an electrolytic solution filled in voids within the capacitor element and the separator. The anode body has dielectric film on a surface thereof. The electrolytic solution intervenes between the anode body and the cathode body and adheres to the dielectric film.

### (Anode Body)

The anode body is formed by forming the dielectric film on the surface of the anode foil formed of the valve metal. The purity of the valve metal of the anode foil is desirably 99.9% or more, and impurities such as silicon, iron, copper, magnesium, and zinc may be contained. The surface of the anode foil is enlarged as a molding formed by molding powder of the valve metal, a sintered body obtained by sintering powder of the valve metal, an etching foil obtained by etching a stretched foil, or a sintered body or a vapor-deposited body in which powder of the valve metal is molded and sintered or vapor-deposited on the surface of rolled foil.

The enlarged surface structure is formed by tunnel-shaped etching pits, spongy pits, or voids between dense powder. Typically, the enlarged surface structure is formed by direct current etching or alternating current etching in which direct current or alternating current is applied on the foil in an acidic aqueous solution containing halogen ions such as hydrochloric acid, or is formed by vapor-depositing or sintering metal particles and the like on a core.

Typically, the dielectric film is an oxide film formed on the surface layer of the anode foil. For example, when the anode foil is an aluminum foil, the dielectric film is aluminum oxide obtained by oxidizing the enlarged surface structure. The dielectric film is formed by chemical conversion treatment in which voltage is applied on the foil in an aqueous solution of adipic acid, boric acid, or phosphoric acid, etc. Furthermore, the dielectric film may be formed using vapor-deposition, a sol-gel method, or liquid phase deposition. Also, the dielectric film may be a layer in which powder of the oxidized valve metal is molded on the surface of the foil.

### (Separator)

The separator includes cellulose such as kraft, Manila hemp, esparto, hemp, rayon, and mixed papers thereof, polyester resins such as polyethylene terephthalate, polybutylene terephthalate, polyethylene naphthalates, and derivatives thereof, polytetrafluoroethylene resins, polyvinylidene fluoride resins, vinylon resins, polyamide resins such as aliphatic polyamides, semi-aromatic polyamides, and wholly aromatic polyamides, polyimide resins, polyethylene resin, polypropylene resin, trimethylpentene resin, polyphenylene sulfide resin, acrylic resin, polyvinyl alcohol resin and the like, and these resins may be used alone or in combination.

The separator may be fibrillated by creating fine fibers branched out from the surface of the original fiber, like fibrillated cellulose, for example. For example, the fibrillation may be performed by beating. The fibrillated fibers intertwine with each other using fibrillated fine fibers, improving the strength of the separator. Accordingly, the separator can be thinner. Thinning the separator allows for an increase in the length of the anode body and the cathode body per unit volume, improving the capacitance of the electrolytic capacitor.

### (Electrolytic Solution)

The electrolytic solution is an electrolytic solution in which a solute is dissolved in a solvent, and additives are added as necessary. The solvent may either be protic organic polar solvents or aprotic organic polar solvents. Typically, the protic polar solvents may be monohydric alcohols, polyhydric alcohols, oxyalcohol compounds, and water, etc. Typically, the aprotic polar solvents may be sulfones, amides, lactones, cyclic amides, nitriles, and sulfoxides, etc.

The monohydric alcohols may be ethanol, propanol, butanol, pentanol, hexanol, cyclobutanol, cyclopentanol, cyclohexanol, and benzyl alcohol, etc. Polyhydric alcohols and oxyalcohol compounds may be ethylene glycol, propylene glycol, glycerin, methyl cellosolve, ethyl cellosolve, methoxypropylene glycol, dimethoxypropanol, etc.

The sulfones may be dimethyl sulfone, ethylmethyl sulfone, diethyl sulfone, sulfolane, 3-methyl sulfolane, and 2,4-dimethyl sulfolane, etc. The amides may be N-methylformamide, N,N-dimethylformamide, N-ethylformamide, N,N-diethylformamide, N-methylacetamide, N,N-dimethylacetamide, N-ethylacetamide, N,N-diethylacetamide, and hexamethylphosphoricamide, etc. The lactones and the cyclic amides may be γ-butyrolactone, γ-valerolactone, δ-valerolactone, N-methyl-2-pyrrolidone, ethylene carbonate, propylene carbonate, butylene carbonate, and isobutylene carbonate, etc. The nitriles may be acetonitrile, 3-methoxypropionitrile, and glutaronitrile, etc. The sulfoxides may be dimethyl sulfoxide, etc.

The solute contained in the electrolytic solution contains anionic components and cationic components, is typically organic acids or salts thereof, inorganic acids or salts thereof, or composite compounds of organic acid and inorganic acid or salts thereof, and may be used alone or in combination of two or more.

The organic acids that become the anionic component as a solute may be carboxylic acid such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acid, malonic acid, 1,6-decanedicarboxylic acid, 1,7-octanedicarboxylic acid, azelaic acid, resorcylic acid, phloroglucinic acid, gallic acid, gentisic acid, protocatechuic acid, pyrocatechuic acid, trimellitic acid, and pyromellitic acid, undecanedioic acid, dodecanedioic acid, tridecanedioic acid, t-butyladipic acid, and 11-vinyl-8-octadecene dioic acid, phenols, and sulfonic acids, etc.

Furthermore, the inorganic acids may be boric acid, phosphoric acid, phosphorous acid, hypophosphorous acid, carbonic acid, and silicic acid, etc. The composite compounds of organic acid and inorganic acid may be borodisalicylic acid, borodioxalic acid, borodiglycolic acid, borodimalonic acid, borodisuccinic acid, borodiadipic acid, borodiazelaic acid, borodibenzoic acid, borodimaleic acid, borodilactic acid, borodimalic acid, boroditartric acid, borodicitric acid, borodiphthalic acid, borodi(2-hydroxy) isobutyric acid, borodiresorcinic acid, borodimethylsalicylic acid, borodinaftoeic acid, borodimandelic acid, and borodi(3-hydroxy) propionic acid, etc.

The cationic component may be ammonium, quaternary ammoniums, quaternized amidiniums, amines, sodium, and potassium, etc. The quaternary ammonium may be tetramethylammonium, triethylmethylammonium, and tetraethylammonium, etc. The quaternary amidiniums may be ethyldimethylimidazolinium and tetramethylimidazolinium, etc. The amines may be primary amines, secondary amines, and tertiary amines. The primary amines may be methylamine, ethylamine and propylamine, the secondary amines may be dimethylamine, diethylamine, ethylmethylamine and dibutylamine, and the tertiary amines may be trimethylamine, triethylamine, tributylamine, ethyldimethylamine, and ethyldiisopropylamine, etc.

Note that the anions and cations may be added to the electrolytic solution in a state of ion dissociative salt, or may be separately added to the electrolytic solution as a solute component of acid that is an anion and base that is a cation. The anions and cations may be used alone or in combination of two or more.

The solvent of the electrolytic solution is preferably glycol compounds. The glycol compound is a compound with a structure in which each hydrogen bonded to two carbon atoms in aliphatic hydrocarbon or cyclic aliphatic hydrocarbon having two or more carbon is substituted by a hydroxyl group. The glycol compound has high boiling point of 150 °C or more. This glycol compound improves the chemical conversion performance of the dielectric film, and the ESR reduction and withstand voltage improvement can be obtained. The glycol compounds may be ethylene glycol, propylene glycol, diethylene glycol, triethylene glycol, and polyoxyethylene glycol. The electrolytic solution may contain one type of the glycol compound solvent or two or more types of the glycol compound solvents. Furthermore, as a solvent, glycol compounds may be used alone or may be used together with other types of solvents.

Furthermore, other additives may be added to the electrolytic solution. The additives may be complex compounds of boric acid and polysaccharides (mannitol, sorbitol, etc.), complex compounds of boric acid and polyhydric alcohols, borate esters, nitro compounds, phosphate esters, and colloidal silica, etc. These may be used alone or in combination of two or more. The nitro compound suppresses the generation amount of hydrogen gas in the electrolytic capacitor. The nitro compounds may be o-nitrobenzoic acid, m-nitrobenzoic acid, p-nitrobenzoic acid, o-nitrophenol, m-nitrophenol, and p-nitrophenol, etc.

The capacitor element is immersed in the electrolytic solution to impregnate the electrolytic solution in the voids of the capacitor element. To impregnate the electrolytic solution in finer voids, depressurization process or pressurization process may be performed, as necessary. The impregnation process may be repeated multiple times. For example, the interior of the capacitor element may be depressurized, and the electrolytic solution may be injected inside the capacitor element while pressurizing the electrolytic solution.

When using gel electrolytes in the electrolytic capacitor, the electrolyte may be formed by adding polyvinyl alcohol to the electrolytic solution to make the electrolyte more viscous or by the electrolytic solution and polymers with three-dimensional network structure that can hold said electrolyte. The three-dimensional polymer is formed by using monomers that will be the main chain of the gel network, a polymerization initiator to polymerize said monomers, and a crosslinking agent to crosslink the polymer and is formed by crosslinking polymers formed from the polymerized monomers.

### (Manufacturing Method)

### (Wound-type)

One example of the manufacturing method of the electrolytic capacitor is as follows. Firstly, in an anode formation process, the enlarged surface layer is formed on one or both surfaces of the anode foil, and the dielectric film is formed on the enlarged surface layer by chemical conversion treatment.

At the cathode side, a surface functional group adjustment process and a cathode formation process are performed. In the surface functional group adjustment process, the amount of the surface functional groups in the carbon material is adjusted. The cathode formation process includes a cathode foil formation process and a carbon layer lamination process. In the cathode foil formation process, the enlarged surface layer is also formed on one or both surfaces of the cathode foil, and the oxide film is formed on the enlarged surface layer, as necessary. In the carbon layer lamination process, the carbon layer containing the carbon material is laminated on the cathode foil. It is preferable to pressure-weld the carbon layer and the cathode foil by press processing. For example, in the press-processing, the cathode body formed by the carbon layer and the cathode foil is sandwiched by a press roller, and press linear pressure is applied. The anode lead wire and the cathode lead wire are electrically or mechanically connected to the anode body and the cathode body.

In the capacitor element formation process, the long anode body and cathode body are wound via the separator to produce a cylindrical wound body. The separator is overlapped so that one end of the separator protrudes from one ends of the anode body and the cathode body. The protruded separator is wound at first so that a core of the wound body follows along the short sides of the anode body and the cathode body, to produce a winding core portion. Then, the long sides of the anode body and the cathode body are wound by rounding them with the winding core portion as a winding shaft.

Then, in the impregnation process, the capacitor element is immersed in the electrolytic solution to impregnate the electrolytic solution in the voids within the capacitor element. To impregnate the electrolytic solution in finer voids, depressurization process or pressurization process may be performed, if necessary. The impregnation process may be repeated multiple times. For example, the interior of the capacitor element may be depressurized, and the electrolytic solution may be injected inside the capacitor element while pressurizing the electrolytic solution.

The capacitor element is housed in an outer casing with one end closed and the other end opened and is sealed in the outer casing by a sealing body. The sealing body is an elastic insulator, such as a rubber plate, or a laminate of rigid insulator substrate such as synthetic resin plate and an elastic insulator and is crimped from the outside of the outer casing. A pressure relief valve which opens when the pressure inside the casing exceeds the predetermined value is formed at the bottom of the casing. After the capacitor element is sealed in the outer casing, aging process is performed to complete the production of the electrolytic capacitor. In the aging process, DC current is applied on the electrolytic capacitor to repair the defects such as the base metal of the valve metal exposed when cutting the anode body or the dielectric film formed during the capacitor element formation process.

### (Laminated Type)

Regarding the laminated-type electrolytic capacitor, in the capacitor element formation process, the anode foil and cathode body in flat shapes are laminated with the separator interposed therebetween. After the laminate body is impregnated with the electrolytic solution, the capacitor element is covered by a laminate film. Alternatively, the capacitor element is sealed by molding, dip coating, or printing resins such as heat-resistant resins and insulating resins. Finally, voltage is applied like the wound-type.

Hereinafter, the cathode body and the electrolytic capacitor of the present disclosure will be described in more detail based on the examples. Note that the present disclosure is not limited to the following examples.

### (Examples)

Cathode bodies of Examples 1 to 3 and Comparative Examples 1 to 4 were produced, and electrolytic capacitors were produced using each cathode body. Carbon material to be contained in each of Examples 1 to 3 and Comparative Examples 1 to 3 was prepared. In Comparative Example 4, a carbon layer was not laminated on a cathode body.

In Example 1, carbon black was used as carbon material, in Example 2, carbon black was used as carbon material, in Example 3, Ketjen black was used as carbon material, in Comparative Example 1, carbon black was used as carbon material, in Comparative Example 2, a mixture (Al₄C₃+C) of aluminum carbide was used as carbon material, and in Comparative Example 3, carbon nanotubes were used, so that the amount of surface functional groups would vary.

Examples 1 to 3 and Comparative Examples 1 to 3 were analyzed using X-ray photoelectron spectroscopy. In X-ray photoelectron spectroscopy, an X-ray photoelectron spectrometer (manufactured by Kratos Analytical, model ESCA-3400, with Vision Instrument Manager control software) was used. Each carbon material is placed on a sample stage, and spectral measurement was performed using narrow-scan measurement. An O1s spectrum (526 to 540 eV) was obtained by using magnesium Kα radiation (Mg-Kα) as an X-ray source and irradiating the carbon material with X-rays. For the other narrow-scanning condition, the acceleration voltage was 10 kV, the emission current was 15 mA, the pass energy was 75 eV, the step voltage was 0.05 eV, and the number of scans was 35.

In the waveform separation analysis of the O1s spectrum, Vision Processing was used as a waveform analysis software. Furthermore, in the waveform separation analysis, the O1s spectrum was separated into a background and a signal using Shirley method as background subtraction. Charge correction of the O1s spectrum was performed by correcting the binding energy of the peak top of the C1s spectrum (280 to 300 eV) obtained under the same measurement condition as the O1s spectrum to 284.8 eV. For the peak fitting, a Gaussian-Lorentzian mixture function (with a Gaussian component of 70%) was used to approximate each peak. Furthermore, for the peak fitting, the FWHM (FWHM: Full Width Half Maximum) that is the half width of the C1s was set to 1.5 to 1.9 eV, and the FWHM of the O1s was set to 2.0 to 2.5 eV. Note that in any of the spectra of Examples 1 to 3 and Comparative Examples 1 to 3, all of the FWHM of each peak obtained by the waveform separation of the same spectrum was set to the same value to perform peak fitting.

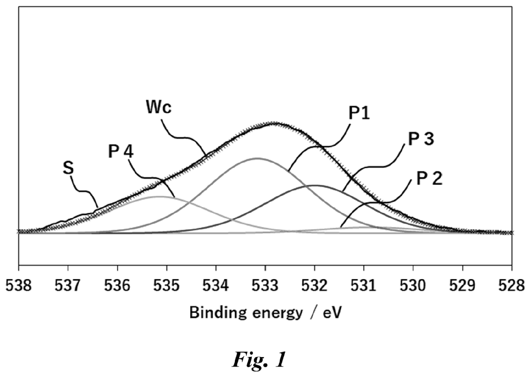

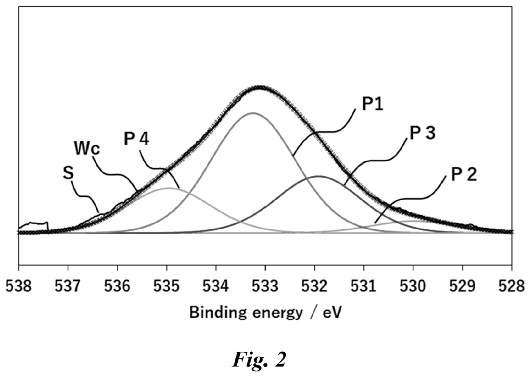

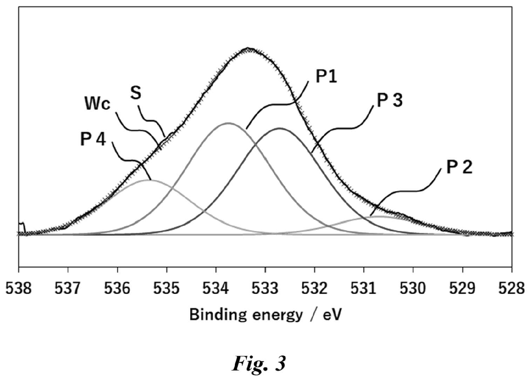

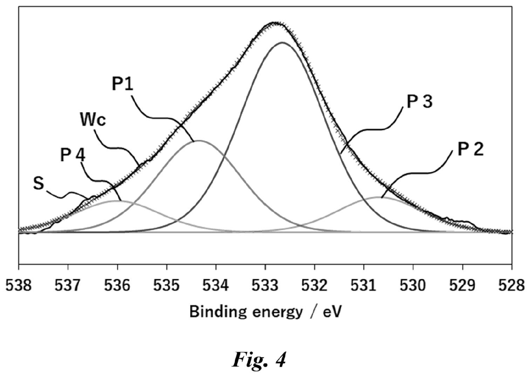

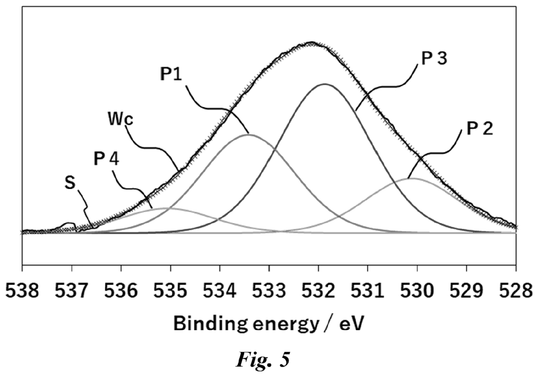

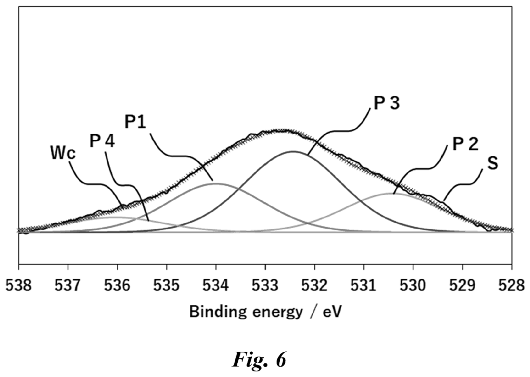

Figs. 1 to 6 illustrate the result of X-ray photoelectron spectroscopy analysis of Examples 1 to 3 and Comparative Examples 1 to 3. Fig. 1 illustrates the result of X-ray photoelectron spectroscopy analysis of the carbon material of Example 1. Fig. 2 illustrates the result of X-ray photoelectron spectroscopy analysis of the carbon material of Example 2. Fig. 3 illustrates the result of X-ray photoelectron spectroscopy analysis of the carbon material of Example 3. Fig. 4 illustrates the result of X-ray photoelectron spectroscopy analysis of the carbon material of Comparative Example 1. Fig. 5 illustrates the result of X-ray photoelectron spectroscopy analysis of the carbon material of Comparative Example 2. Fig. 6 illustrates the result of X-ray photoelectron spectroscopy analysis of the carbon material of Comparative Example 3.

In figures, S represents the measured O1s spectrum, Wc represents the synthetic waveform, P1 represents a peak originating from the C-O bond, P2 represents a peak originating from the O-C=O bond, P3 represents a peak originating from the C=O bond, and P4 represents a peak originating from the H₂O bond.

Table 1 shows the result of X-ray photoelectron spectroscopy analysis.

**[Table 1]**

| | | **O-C=O** | **C=O** | **C-O** | **H₂O** | **Ratio of C=O\|/ [C-O]** | **Ratio of ([O-C=O]+[C=O]) /[C-O]** |
|---|---|---|---|---|---|---|---|
| **Example 1** | **B.E. [cV]** | **530.9** | **532.0** | **533.2** | **535.2** | **0.641** | **0.713** |
| | **Area Ratio [%]** | **3.3** | **29.1** | **45.4** | **22.3** | | |
| **Example 2** | **B.E. [eV]** | **530.0** | **531.9** | **533.3** | **535.0** | **0.475** | **0.574** |
| | **Area Ratio [%]** | **5.1** | **24.4** | **51.3** | **19.2** | | |
| **Example 3** | **B.E. [eV]** | **530.7** | **532.7** | **533.7** | **535.4** | **0.953** | **1.112** |
| | **Area Ratio [%]** | **6.1** | **36.6** | **38.4** | **18.9** | | |
| **Comparative Example 1** | **B.E. [eV]** | **530.7** | **532.7** | **534.3** | **536.0** | **2.076** | **2.456** |
| | **[%]** | **10.0** | **54.6** | **26.3** | **9.1** | | |
| **Comparative Example 2** | **Area Ratio [%]** | **530.1** | **531.9** | **533.4** | **535.1** | **1.514** | **2.064** |
| | **Area Ratio [%]** | **16.6** | **45.7** | **30.2** | **7.4** | | |
| **Comparative Example 3** | **B.E. [eV]** | **530.4** | **532.4** | **534.0** | **536.0** | **1.652** | **2.457** |
| | **Area Ratio [%]** | **21.3** | **43.8** | **26.5** | **8.4** | | |

In Examples 1 to 3 and Comparative Examples 1 to 3, the electrolytic capacitors were produced using the cathode bodies in which the carbon layers containing the carbon material shown in above Table 1 had been laminated on the cathode foil. In Comparative Example 4, an electrolytic capacitor was produced using the cathode foil without the carbon layer laminated thereon.

The cathode foils in Examples 1 to 3 and Comparative Examples 1 to 4 was aluminum foils of 3 cm × 4 cm. AC etching was performed on the aluminum foil to form an enlarged surface layer formed by spongy etching pits on both surfaces of the foil, except for Comparative Example 3. In the AC etching process, the cathode foil was immersed in acidic aqueous solution with hydrochloric acid having the liquid temperature of 25 °C and 8 wt% as a main electrolyte, and current with alternating current of 10 Hz and current density of 0.14 A/cm² was applied on a substrate for about 5 minutes to enlarge both surfaces of the aluminum foil. Furthermore, chemical conversion process was performed on the aluminum foil to form a dielectric film on the surface of the enlarged surface layer.

In Examples 1 to 3 and Comparative Examples 1 to 3, the carbon layer was laminated on the cathode foil. Except for Comparative Example 2, for the carbon layer, the carbon material shown in above Table 1, styrene butadiene rubber (SBR) as a binder, and a sodium carboxymethyl cellulose (CMC-Na) aqueous solution as aqueous solution containing a dispersant were mixed and kneaded in a composition ratio of 84:6:10 to produce a slurry.

This slurry was uniformly applied on the cathode foil. Then, the slurry was heated and dried to volatilize the solvent. In Example 1, press-processing was further performed on the cathode body. In the press-processing, the cathode body was sandwiched by a press roller, and the press linear pressure of 5.38 kN/cm was applied to fix the carbon layer on the cathode foil. The press linear pressure was applied using a press machine manufactured by TAKUMI GIKEN. The diameter of the press roller was 180 mm, the press-processing width was 130 mm, and the cathode body was transported once at 3 m/min.

The carbon layer of Comparative Example 2 had a two-layer structure in which the carbon layer is formed on a surface of an aluminum carbide layer. Firstly, the surface of the aluminum foil was coated with carbon particles, and heat treatment was performed on the aluminum foil coated with carbon particles in the hydrocarbon atmosphere. By the heat treatment, the surface of the aluminum foil was carbonized, and the aluminum carbide layer was formed.

The anode foil was the same in Examples 1 to 3 and Comparative Examples 1 to 4. The aluminum foil of 3 cm × 4 cm was used as the anode foil. DC etching was performed on the aluminum foil to form the enlarged surface layer formed by tunnel-shaped etching pits of the foil. In the DC etching process, a first process of forming pits and a second process of enlarging the pits were used, and in the first process, electrochemical etching process was performed on the aluminum foil by DC current in an aqueous solution containing chlorine ions. In the second process, electrochemical etching process was performed by DC current in an aqueous solution containing nitrate ions to enlarge the pits formed in the aluminum foil after the first process.

After the enlarged surface layer was formed, chemical conversion treatment to form the dielectric film on the surface of the enlarged surface layer was performed. In detail, voltage of 558 V was applied in a chemical conversion solution of boric acid of 70 percent by weight at the liquid temperature of 85 °C.

The anode foil and the cathode body were each ultrasonically connected to a tab-shaped lead terminal formed of aluminum. Next, the anode foil was sandwiched by two cathode bodies via separators to produce a laminate. A 4 cm ×5 cm kraft-type separator was used as a separator. Note that, before the lamination, the back surface of the cathode body, which is the surface opposite the surface facing the anode foil via the separator, is covered by an insulating resin.

The laminate of the anode foil, the cathode body, and the separator was impregnated with the electrolytic solution. Ethylene glycol as a solvent and azelaic acid salt as a solute were added to prepare the electrolytic solution. After impregnating the electrolytic solution, the laminate of the anode foil, the cathode body, and the separator was sealed by laminate material. The lead terminals connected to the anode foil and the cathode body were drawn out of the laminate material. Accordingly, the electrolytic capacitor was produced as a laminated cell. Aluminum laminate material with the thickness of 110 µm was used.

After the laminated cell was produced, aging process was performed. In the aging process, voltage of 450 V was applied on the laminate cell at the normal temperature (25 °C) for 120 minutes. Thus, the electrolytic capacitors according to Examples 1 to 3 and Comparative Examples 1 to 4 with the rated voltage of 401 V were produced.

### (Hydrogen Gas Generation Test)

DC voltage of 401 V was applied to the electrolytic capacitors of Examples 1 to 3 and Comparative Examples 1 to 4 under the temperature environment of 105 °C for 2000 hours, and the generation amount of gas was measured for each elapsed time. The generation amount of gas was measured by a swelling volume (volume change; ml) of the laminated cell. The swelling amount of the laminated cell was measured by the Archimedes method. That is, the volume of the liquid displaced by the laminated cell was measured by measuring the weight increased when the laminated cell was immersed in water.

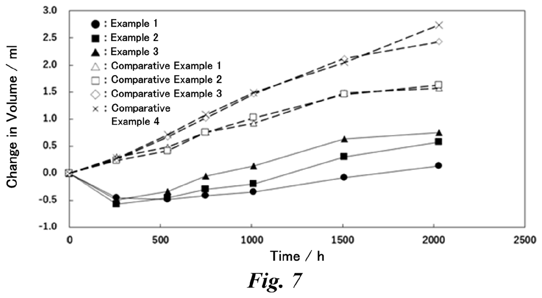

Fig. 7 illustrates the measurement result of the hydrogen gas generation test. Fig. 7 is a graph indicating the time variation of the volume of the electrolytic capacitors of Examples 1 to 3 and Comparative Examples 1 to 4.

As illustrated in Fig. 7, there was a great difference between the change in volume after 2000 hours had elapsed of Comparative Examples 1 to 4 and the group of Examples 1 to 3. In other words, it was observed that the generation of hydrogen gas was suppressed in the group of Examples 1 to 3 while hydrogen gas a large amount of hydrogen gas was generated in the group of Comparative Examples 1 to 4.

Furthermore, the electrolytic capacitor of Comparative Example 4 used the cathode body without the carbon layer laminated thereon, however, it can be seen that the electrolytic capacitors of Comparative Examples 1 to 3 generated a large amount of hydrogen gas even though the cathode body had the carbon layer. In contrast, it was observed that the electrolytic capacitors of Examples 1 to 3 suppressed the generation of hydrogen gas even though the cathode body had the carbon layer like Comparative Examples 1 to 3.

As shown in above Table 1, in the cathode body of Comparative Examples 1 to 3, the ratio of the total of the area ratio [COO] of the peak P2 originating from the O-C=O bond in the O1s spectrum and the area ratio [C=O] of the peak P3 originating from the C=O bond in the O1s spectrum relative to the area ratio [C-O] of the peak P1 originating from the C-O bond in the O1s spectrum was ([COO]+[C=O])/[C-O]>2.0. That is, the cathode body of Comparative Examples 1 to 3 included the carbon layer containing the carbon material with a large amount of the oxidized surface functional groups.

On the other hand, as shown in above Table 1, in the cathode body of in Examples 1 to 3, the ratio of the total of the area ratio [COO] of the peak P2 originating from the O-C=O bond in the O1s spectrum and the area ratio [C=O] of the peak P3 originating from the C=O bond in the O1s spectrum relative to the area ratio [C-O] of the peak P1 originating from the C-O bond in the O1s spectrum was ([COO]+[C=O])/[C-O]<2.0. That is, the cathode body of the Examples 1 to 3 included the carbon layer containing the carbon material with a small amount of the oxidized surface functional groups.

Thus, from the result of X-ray photoelectron spectroscopy analysis, it was observed that, not only when the cathode body simply includes the carbon layer, but also when the ratio of the total of the area ratio [COO] of the peak P2 originating from the O-C=O bond in the O1s spectrum and the area ratio [C=O] of the peak P3 originating from the C=O bond in the O1s spectrum relative to the area ratio [C-O] of the peak P1 originating from the C-O bond in the O1s spectrum was ([COO]+[C=O])/[CO]<2.0, the generation amount of hydrogen gas was suppressed.

## Claims

1. A cathode body of an electrolytic capacitor, comprising:
a cathode foil formed of a valve metal; and
a carbon layer containing a carbon material and laminated on the cathode foil,
wherein in an X-ray photoelectron spectroscopy analysis, the carbon material exhibits a peak P1 originating from a C-O bond in an O1s spectrum, a peak P2 originating from an O-C=O bond in an O1s spectrum, and a peak P3 originating from a C=O bond in an O1s spectrum, and
a ratio of a total of an area ratio [COO] of the peak P2 and an area ratio [C=O] of the peak P3 relative to an area ratio [C-O] of the peak P1 is ([COO]+[C=O])/[C-O]<2.0.

2. The cathode body according to claim 1, wherein:
the peak P1 originating from the C-O bond in the O1s spectrum appears in a range of 533 eV or more,
the peak P2 originating from the O-C=O bond in the O1s spectrum appears in a range of 530 eV or more and 533 eV or less, and
the peak P3 originating from the C=O bond in the O1s spectrum appears in a range of 530 eV or more and 533 eV or less.

3. The electrolytic capacitor, comprising:
the cathode body according to claim 1 or 2,
an anode body having a dielectric film and facing the cathode body, and
an electrolyte intervening between the cathode body and the anode body.

4. A manufacturing method of a cathode body of an electrolytic capacitor, comprising:
a surface functional group adjustment process of adjusting an amount of a surface functional group of a carbon material; and
a carbon layer lamination process of forming a carbon layer containing the carbon material on a cathode foil formed of a valve metal,
wherein in the surface functional group adjustment process:
in an X-ray photoelectron spectroscopy analysis, the carbon material exhibits a peak P1 originating from a C-O bond in an O1s spectrum, a peak P2 originating from an O-C=O bond in an O1s spectrum, and a peak P3 originating from a C=O bond in an O1s spectrum, and
a ratio of a total of an area ratio [COO] of the peak P2 and an area ratio [C=O] of the peak P3 relative to an area ratio [C-O] of the peak P1 is adjusted to ([COO]+[C=O])/[C-O]<2.0.

5. The manufacturing method of the cathode body of the electrolytic capacitor according to claim 4, wherein:
the peak P1 of the O1s spectrum originating from the C-O bond appears in a range of 533 eV or more,
the peak P2 of the O1s spectrum originating from the O-C=O bond appears in a range of 530 eV or more and 533 eV or less, and
the peak P3 of the O1s spectrum originating from the C=O bond appears in a range of 530 eV or more and 533 eV or less.

6. A manufacturing method of the electrolytic capacitor, comprising:
a process of producing the cathode body according to claim 4 or 5,
a process of producing an anode body having a dielectric film, and
a process of interposing an electrolyte between the cathode body and the anode body.
